# EUROPÄISCHE PATENTSCHRIFT

(11) **EP 4 263 174 B1**
(45) Veröffentlichungstag und Bekanntmachung des Hinweises auf die Patenterteilung: **26.08.2026**
(21) Anmeldenummer: 21839034.2
(22) Anmeldetag: 09.12.2021
(51) Int. Cl.: B29C 63/02, A45C 11/00, F16M 11/22, F16M 13/00, G06F 1/16

(54) **MONTAGEVORRICHTUNG FÜR EINEN DISPLAYSCHUTZ**
MOUNTING MEANS FOR A DISPLAY PROTECTOR
DISPOSITIF DE MONTAGE POUR UNE PROTECTION D'ÉCRAN

(30) Priorität: 18.12.2020 DE 102020134159
(43) Veröffentlichungstag der Anmeldung: 25.10.2023
(73) Patentinhaber: E.V.I. GmbH, 82061 Neuried (DE)
(72) Erfinder: KOPP, Ulrich, 82061 Neuried (DE); VOGTMANN, Markus, 82061 Neuried (DE)
(74) Vertreter: TBK
(86) Internationale Anmeldenummer: PCT/EP2021/084931
(87) Internationale Veröffentlichungsnummer: WO 2022/128722

(56) Entgegenhaltungen:
- EP-A1- 3 677 406
- DE-U1- 202020 101 359

## Beschreibung

### Technisches Gebiet

Die vorliegende Offenbarung betrifft eine Montagevorrichtung für einen Displayschutz.

### Stand der Technik

In dem Stand der Technik wird eine Montagevorrichtung für einen Displayschutz verwendet, um einem Anwender ein Anbringen (Fügen) des Displayschutzes auf einem Display eines Geräts mit hoher Positionsgenauigkeit zu ermöglichen.

Aus dem Dokument DE 20 2020 101 359 U1 ist eine solide ausgebildete Vorrichtung zum Aufbringen einer Schutzvorrichtung auf ein Display bekannt. Diese weist einen Rahmen mit Ausrichtabschnitten auf, die fest mit dem Rahmen verbunden sind. Der Rahmen verfügt dabei über eine Ausrichtaussparung, die zumindest einen Ausrichtabschnitt aufweist, der dazu dient, den Displayschutz auszurichten und hierzu in Kontakt mit dem Displayschutz zu kommen. Weiterhin sind am Rahmen Stützbauteile vorgesehen, die dazu dienen, das Display bzw. das Gerät gegenüber dem Displayschutz auszurichten und hierzu in Kontakt mit dem Display bzw. dem Gerät bringbar sind.

Aus dem Dokument EP 3 677 406 A1 ist eine ähnliche Vorrichtung bekannt, die weiterhin über einen verschwenkbaren Deckel verfügt, der über eine Ausnehmung zur Aufnahme von Ausrichtabschnitten verfügt. Mittels dieser Ausrichtabschnitte werden wie ausgeführt Displayschutz und Display bzw. Gerät zueinander ausgerichtet, um den Displayschutz korrekt auf dem Gerät bzw. Display zu positionieren.

### Zusammenfassung der Erfindung

Der Erfindung liegt die Aufgabe zugrunde, eine Montagevorrichtung für einen Displayschutz bereitzustellen, der ein verbessertes Fügen mit hoher Präzision ermöglicht. Außerdem soll die Montagvorrichtung ressourcenschonend herstellbar sein. Die präzise Positionierung des Displayschutzes auf dem Display ist wegen der im Displayschutz enthaltenen Aussparungen für z. B. Sensoren, Kameras und Lautsprecher besonders wichtig.

Die Aufgabe wird mit den Merkmalen des Anspruchs 1 gelöst. Vorteilhafte Weiterbildungen sind Gegenstand der Unteransprüche.

Gemäß der Erfindung werden mehrere Stützbauteile vorgesehen, die mittels eines Eingriffsabschnitts mit einem Aufnahmeabschnitt am Rahmen in Eingriff bringbar sind, also in diesen eingesteckt werden. Dieser grundlegende Unterschied, dass es sich bei der beanspruchten Montagevorrichtung nicht um eine feste zur Verfügung gestellte Vorrichtung handelt, in die das Gerät und der Displayschutz eingelegt werden, sondern um eine Montagevorrichtung, bei der die erforderliche Ausrichtung durch Einstecken entsprechender Stützbauteile erst ermöglicht wird, erlaubt zum einen den Displayschutz mit hoher Präzision auf dem Display anzubringen, zum anderen eine ressourcenschonende Herstellung. Weiterhin vermindern sich die Transportkosten, da die gesamte Montagevorrichtung kompakt in einer Ebene zur Verfügung gestellt werden kann und erst durch das Einstecken der verschiedenen Elemente die erforderliche dreidimensionale Gestalt annimmt. Eine derartige ressourcenschonende Montagevorrichtung, die sich darüber hinaus platzsparend und kompakt verpacken lässt, ist im Stand der Technik ohne Vorbild.

Ein Gerät kann beispielsweise ein Telefon, Smartphone, Tablet oder E-Book-Reader sein. Das Gerät weist ein Display auf. Beispielsweise ist das Display ein LCD- oder OLED-Bildschirm eines Smartphones, inklusive der konventionellen Verglasung des Displays.

Eine Displaynormalenrichtung ist eine Richtung, die senkrecht zu dem Display steht, wenn das Gerät mit dem Rahmen positioniert ist. Eine Längsrichtung ist eine Richtung, in der das Gerät die größte Erstreckung aufweist und senkrecht zu der Displaynormalenrichtung ist. Eine Querrichtung ist senkrecht zu der Längsrichtung und der Displaynormalenrichtung. Die Längsrichtung und die Querrichtung spannen eine Fügeebene auf, in der sich das Display und der Displayschutz während dem Fügen berühren. Die Fügeebene liegt somit auf der Displayoberfläche, wenn das Gerät mit dem Rahmen positioniert ist.

Der Displayschutz und das Gerät können beispielweise von unterschiedlichen Seiten in die Montagevorrichtung einsetzbar sein. Beispielsweise kann das Gerät in Displaynormalenrichtung von unten in die Montagevorrichtung eingesetzt werden und der Displayschutz von oben. Anders ausgedrückt kann in diesem Fall die Montagevorrichtung auf das Gerät oder Display in Displaynormalenrichtung aufgesetzt werden und der Displayschutz dann anschließend in die Montagevorrichtung eingesetzt werden.

Somit wird das Display mittels dem Displayausrichtabschnitt positioniert. Anders ausgedrückt wird die Montagevorrichtung mittels dem Displayausrichtabschnitt relativ zu dem Display positioniert. Der Displayschutz wird mittels dem Ausrichtabschnitt positioniert.

Alternativ kann der Displayschutz und das Gerät auch von einer Seite aus eingesetzt werden.

Beispielsweise kann der Rahmen auf einer Seite in der Längsrichtung zumindest das Gerät freilegen. Somit kann das Gerät von dieser Seite in Längsrichtung in die Montagevorrichtung eingesetzt werden und auch der Displayschutz kann von dieser Seite in Längsrichtung an dem Ausrichtabschnitt angelegt werden und somit in die Montagevorrichtung eingesetzt werden.

Beispielsweise kann der zumindest eine Ausrichtabschnitt so gestaltet sein, dass die Ausrichtaussparung so groß ist, dass das Gerät in einer um die Querrichtung bzgl. zu der Fügeebene verkippte Ausrichtung durch die Ausrichtaussparung geführt werden kann. Wenn das Gerät größtenteils durch die Ausrichtaussparung eingefädelt ist, kann das Display durch zurückkippen in die Fügeebene ausgerichtet werden und damit mit der Montagevorrichtung für ein Fügen positioniert werden.

Wenn das Gerät bzw. Display und der Displayschutz ihre Ausrichtung für ein Fügen haben, sind sie auf unterschiedlichen Seiten in Kontakt mit der Montagevorrichtung. Stellen, an denen das Gerät oder das Display Kontakt mit der Montagevorrichtung haben, sind als Ausrichtabschnitt bezeichnet. Stellen, an denen der Displayschutz Kontakt mit der Montagevorrichtung haben, sind als Displayausrichtabschnitt bezeichnet.

Ausrichtabschnitte und Displayausrichtabschnitte sind so in der Montagevorrichtung angeordnet, dass sie den Displayschutz während dem Fügen relativ zu dem Gerät bzw. dem Display positionieren. Damit wird eine hohe Positionsgenauigkeit des Displayschutzes auf dem Display ermöglicht

Der Rahmen stellt ein zentrales Bauteil dar, an dem Displayausrichtabschnitte vorzugsweise entweder direkt verbunden oder sogar in ihn integriert sind. Somit ist die Anzahl an Schnittstellen zwischen den Abschnitten, die das Display positionieren, und Abschnitten, die den Displayschutz positionieren, möglichst weit reduziert und es sind Toleranzketten minimiert. Das sorgt für eine hohe Positionsgenauigkeit.

Displayausrichtabschnitte und Ausrichtabschnitte sind vorzugsweise entweder in den Rahmen integriert oder in Stützbauteile. Die Stützbauteile sind über Koppelbereiche an den Rahmen koppelbar. Ein Koppelbereich ist dadurch gekennzeichnet, dass in dem Stützbauteil ein Eingreifabschnitt vorhanden ist und in einem entsprechenden Bereich in dem Rahmen ein Aufnahmeabschnitt vorhanden ist. Dabei ist der Aufnahmeabschnitt passgenau zu dem Eingreifabschnitt, sodass das Stützbauteil an dem Rahmen angebracht werden kann. Beispielsweise mittels Klemmen oder Kleben.

Ein Stützbauteil kann dazu dienen, ein Display auszurichten, aber auch dazu, einen Displayschutz auszurichten.

Ein Stützbauteil, das mit dem Rahmen in Eingriff ist, kann sich zu einer Unterseite in Displaynormalenrichtung der Fügeebene erstrecken.

Ferner kann in der Montagevorrichtung eine Ausrichtaussparung größer sein, als der auf das Display gefügte Displayschutz, aus der Displaynormalenrichtung betrachtet.

Der Displayschutz kann in Längsrichtung mittels dem Ausrichtabschnitt positioniert werden. Dabei kann der Displayschutz bezüglich der Fügeebene verkippt sein. Für ein Fügen wird der Displayschutz in die Fügeebene zurückgekippt.

Beispielsweise kann der Displayschutz in Längsrichtung eine größere Erstreckung aufweisen, als in Querrichtung. Die Breite der Aussparung in Querrichtung kann dann größer sein als eine Breite des Displayschutzes in Querrichtung. Es kann aber auch eine Breite der Ausrichtaussparung in Längsrichtung größer sein als eine Breite des Displayschutzes. In diesem Fall ist in einer Achse ein weiterer Ausrichtabschnitt oder eine Ausrichtaussparung vorgesehen.

Dadurch ist es möglich, den Displayschutz an das Gerät zu fügen, ohne dabei in der Breite des Displayschutzes an den Rahmen zu stoßen. Dadurch ist ein Fügen des Displayschutzes mit hoher Präzision bzw. Positionsgenauigkeit möglich.

Ferner kann die Montagevorrichtung mehrere Ausrichtabschnitte aufweisen.

Dadurch ist es möglich den Displayschutz bezüglich mehrerer Richtungen auszurichten.

Beispielsweise kann ein Ausrichtabschnitt in Längsrichtung und ein Ausrichtabschnitt in Querrichtung vorgesehen sein. Dann kann der Displayschutz eindeutig in der Fügeebene relativ zu dem Display mit großer Präzision positioniert werden.

Es können aber auch weitere Ausrichtabschnitte vorhanden sein. Ist beispielsweise ein weiterer Ausrichtabschnitt mittig an dem ersten Ausrichtabschnitt positioniert und hat der Displayschutz an einer entsprechenden Stelle eine Aussparung, kann der Anwender sich an diesem weiteren Ausrichtabschnitt orientieren bevor er den Displayschutz für ein Fügen an dem ersten Ausrichtabschnitt positioniert und in die Fügeebene bringt. Dadurch wird das Positionieren des Displayschutzes vereinfacht und der Anwender kann Displayschutz und Display mit größerer Präzision fügen.

Ferner können in der Montagevorrichtung Ausrichtabschnitte über einen Ausrichtverbindungsbereich verbunden sein.

Dadurch, dass die Ausrichtabschnitte miteinander verbunden sind, ist die Positionierung relativ zueinander sichergestellt. Ein Verschieben der Ausrichtabschnitte zueinander wird somit verhindert. Damit kann ein Fügen mit höherer Präzision durchgeführt werden.

Beispielsweise können Ausrichtabschnitte bogenförmig oder teilkreisförmig, aber auch elliptisch oder in sonstiger Weise miteinander verbunden sein.

Ferner kann die Montagevorrichtung mehrere Stützbauteile aufweisen.

Das hat den Vorteil, dass das Display, bzw. der Displayschutz an mehreren Stellen ausgerichtet werden können, ohne dass sich ein Stützbauteil sehr weit erstrecken muss. Dadurch kann das benötigte Baumaterial reduziert werden. Somit kann die Montagevorrichtung kostengünstig, ressourcenschonend und ökonomisch hergestellt werden.

Beispielsweise kann ein Stützbauteil in Längsrichtung und ein Stützbauteil in Querrichtung angeordnet sein. Somit kann das Display, bzw. der Displayschutz präzise in der Fügeebene positioniert werden und ein Verdrehen oder Verschieben parallel zu der Fügeebene kann verhindert werden. Außerdem müssen sich die Stützbauteile in der Fügeebene nicht weit erstrecken. Beispielsweise ist bereits ein stiftförmiges Stützbauteil mit kleinem Durchmesser wirksam. Dadurch wird wenig Baumaterial benötigt.

Außerdem kann sich die Anzahl der Stützelemente variieren und sich beispielsweise an der Größe des Geräts oder Displays orientieren. Beispielsweise können große Geräte auf zumindest einer Seite in der Längs- oder Querrichtung mehrere Stützbauteile aufweisen. Dadurch wird ein präzises Fügen auch bei großen Geräten, bzw. Displays ermöglicht.

Ferner können in der Montagevorrichtung Stützbauteile über einen Stützverbindungsbereich miteinander verbunden sein.

Das hat den Vorteil, dass sich die Stützbauteile gegenseitig stützen. Zusätzlich zu dem Koppelbereich werden stabilisieren die Stützbauteile ihre Position gegenseitig. Dadurch wird sichergestellt, dass die Positionierung der Ausrichtabschnitte, bzw. Displayausrichtabschnitte während dem Fügen zueinander erhalten bleibt. Dadurch ist ein Fügen mit hoher Präzision möglich.

Ferner kann in der Montagevorrichtung der Stützverbindungsbereich aus Eingreifabschnitten von verbundenen Stützbauteilen bestehen.

Somit können Stützbauteile auf einfache Weise miteinander verbunden werden. Das erleichtert dem Anwender die Handhabung der Montagevorrichtung.

Beispielsweise können Stützbauteile mittels Vorsprüngen und entsprechenden Aussparungen ineinandergesteckt werden. Stützverbindungsbereiche können sich auch durch eine Klebefolie oder Klebeschicht auszeichnen, mittels der Stützbauteile miteinander verbunden sind.

Ferner kann die Montagevorrichtung, bezogen auf das mit der Montagevorrichtung positionierte Gerät bzw. auf den Displayschutz, mindestens einen Displayausrichtabschnitt bzw. ein Ausrichtabschnitt auf beiden Seiten in einer Längsrichtung, und auf beiden Seiten in einer Querrichtung aufweisen.

Es können jeweils ein Displayausrichtabschnitt bzw. ein Ausrichtabschnitt in Stützbauteilen vorgesehen sein. Dadurch müssen Stützbauteile nicht so groß ausgeführt werden um an verschiedenen Stellen einen Displayausrichtabschnitt bzw. einen Ausrichtabschnitt bereitstellen zu können. Dadurch kann die Montagevorrichtung mit geringem Materialbedarf ressourcenschonend und ökonomisch hergestellt werden.

Mehrere Displayausrichtabschnitte bzw. Ausrichtabschnitte können an verschiedenen Stellen in einem Stützbauteil vorhanden sein. Somit kann die Anzahl notwendiger Stützbauteile reduziert werden und die Herstellung der Montagevorrichtung kann ressourcenschonender und ökonomisch erfolgen.

Ferner kann der Rahmen der Montagevorrichtung eine Plattenform haben und die eine Seite eine Plattenoberseite und die andere Seite eine Plattenunterseite sein.

Durch die Plattenform ist es möglich, den Rahmen der Montagevorrichtung ohne aufwändige Form herzustellen, wie es beispielsweise beim Kunststoffdruckguss nötig ist. Das reduziert die Herstellungskosten.

Als Material für einen plattenförmigen Rohling kommen beispielsweise Pappe, MDF, HDF, Sperrholz, etc. oder ein Materialmix in Betracht. Es können biologisch abbaubare, nachwachsende oder recycelbare Rohstoffe verwendet werden. Es sind alle stabilen Flachmaterialien geeignet.

Die Oberfläche des Rahmens und des Rohlings kann Stufen oder Wellen oder eine sonstige Oberflächenstruktur aufweisen, es kann eine einheitliche Dicke oder aber bereichsweise unterschiedliche Dicken aufweisen. Solche Elemente der Oberflächenstruktur können beispielsweise als Aussparung verwendet werden. Außerdem kann es solch eine Oberflächenstruktur dem Anwender erleichtern, den Rahmen zu greifen und verbessert somit die Handhabbarkeit der Montagevorrichtung.

Ein Dicke für die Plattenform kann beispielsweise im Bereich von 0.8 mm und 5 mm liegen, vorzugsweise zwischen 1.5 und 2.5 mm. Die Dicke des Materials kann sich an den Materialeigenschaften orientieren. So können Materialien mit einer hohen Festigkeit dünner ausgeführt sein und Materialien mit einer niedrigen Festigkeit können tendenziell dicker ausgeführt sein. Dadurch ist die Herstellung auf einfache Weise möglich. Beispielsweise muss weniger Energie für die Herstellung des Rahmens mittels Laserschneiden aufgewendet werden, wenn die Dicke des Rohlings reduziert ist. Somit kann der Rahmen kostengünstig, energieeffizient, ökonomisch und ökologisch hergestellt werden.

Außerdem kann somit sichergestellt werden, dass die Montagevorrichtung eine hinreichende Steifigkeit aufweist, so dass relevante Ausrichtabschnitte und Displayausrichtabschnitte während dem Fügen relativ zueinander positioniert bleiben. Dadurch wird ein Fügen mit hoher Präzision ermöglicht.

Außerdem weist eine plattenförmige Gestaltung den Vorteil auf, dass die Rahmen einen geringen Raumbedarf aufweisen, wodurch Transport- und Lagerkosten beispielsweise für einen Hersteller reduziert werden können.

Außerdem können die Montagevorrichtungen durch die Plattenform so hergestellt werden, dass sie leicht sind. Dadurch können Transportkosten und eine daraus resultierende Umweltbelastung reduziert werden.

Der Rahmen kann dem Anwender als Bausatz oder als fertig aufgebauter Rahmen bereitgestellt werden.

Ferner kann die Montagevorrichtung auf der Plattenunterseite oder in Stützbauteilen einen Abstützabschnitt aufweisen, so dass sich die mit dem Gerät positionierte Montagevorrichtung auf dem Display oder auf dem Gerät abstützt, wobei der Abstützabschnitt die Fügeebene bildet.

Dadurch kann die Montagevorrichtung bezüglich dem Display in allen Richtungen, der Längsrichtung, der Querrichtung und der Displaynormalenrichtung eindeutig positioniert werden. Das ermöglicht ein Fügen mit hoher Präzision.

Auf der Plattenunterseite können auch mehrere Abstützabschnitte an verschieden Positionen ausgestaltet sein. Dadurch kann eine Ausrichtung der Montagevorrichtung zu dem Display genau eingestellt werden.

Sind die Abstützabschnitte weit voneinander entfernt, verleiht dies der Montagevorrichtung Stabilität und es kann verhindert werden, dass sich die Montagevorrichtung während dem Fügen relativ zu dem Display bewegt.

Mehrere Abstützabschnitte können auch großflächig miteinander verbunden sein.

Es kann die Unterseite des plattenförmigen Rahmens als Abstützabschnitt verwendet werden. Dadurch muss dieser Abstützabschnitt nicht gesondert gefertigt werden und die Herstellungskosten der Montagevorrichtung können reduziert werden.

Ferner können sich Aussparungen der Montagevorrichtung von der einen Seite zu der anderen Seite erstrecken.

Dadurch kommen als Herstellungsverfahren für den Rahmen beispielsweise Stanzen, Laserscheiden oder Wasserstrahlschneiden in Betracht. Das reduziert die Herstellungskosten und die Montagevorrichtung kann gleichzeitig mit hoher Präzision hergestellt werden. Dadurch wird ein präzises Fügen des Displayschutzes und des Displays ermöglicht.

Ferner kann in der Montagevorrichtung das Display des mit der Montagevorrichtung positionierten Geräts dem Displayschutz als ein zusätzlicher Ausrichtabschnitt dienen.

Dadurch kann in der Montagevorrichtung ein Ausrichtabschnitt entfallen, der den Displayschutz in Displaynormalenrichtung positioniert. Das reduziert die Herstellungskosten für die Montagevorrichtung.

Wenn das Gerät bereits mit der Montagevorrichtung positioniert ist, kann beispielsweise zunächst der Displayschutz in einer zur Fügeebene verkippten Ausrichtung mit dem Display, also dem zusätzlichen Ausrichtabschnitt in Anlage gebracht werden. Anschließend kann der Displayschutz beispielsweise mit einem Ausrichtabschnitt für ein Ausrichten in der Längsrichtung in Anlage gebracht werden. Anschließend kann der Displayschutz beispielsweise mit einem Ausrichtabschnitt für ein Ausrichten in der Querrichtung in Anlage gebracht werden. Dadurch, dass der Displayschutz bereits in der Displaynormalenrichtung positioniert ist, bevor der Displayschutz in der Längs- und Querrichtung positioniert wird, können die Ausrichtabschnitte für ein Positionieren in Längs- und Querrichtung eine geringe Erstreckung in der Displaynormalenrichtung aufweisen. Mit anderen Worten, kann die Plattenform sehr dünn ausgestaltet werden und die Montagevorrichtung kann trotzdem ihre Aufgabe erfüllen. Das reduziert das notwendige Material für die Herstellung, das Gewicht und den Platzbedarf der Montagvorrichtung.

Ferner können Ausrichtaussparung bzw. Stützbauteile, aus der Displaynormalenrichtung betrachtet, eine Kontur des Displayschutzes mit einem Abstand nach außen parallel zu der Fügeebene aufweisen.

Wenn Stützbauteile Ausrichtabschnitte zur Ausrichtung des Displayschutzes aufzuweisen, können die Stützbauteile den Abstand aufweisen. Wenn die Ausrichtaussparung Ausrichtabschnitte zur Ausrichtung des Displayschutzes aufweisen, kann die Ausrichtaussparung den Abstand aufweisen.

Der Abstand dient dazu, zu gewährleisten, dass der Displayschutz während dem Fügen nicht durch einen Ausrichtabschnitt in seiner Bewegung gehindert wird. Beispielsweise in einem Fall in dem ein Ausrichtabschnitt in der Längsrichtung und je ein Ausrichtabschnitt auf beiden Seiten des Displayschutzes in der Querrichtung angeordnet ist, ist es für ein Fügen des Displayschutzes erwünscht, dass diese in der Querrichtung angeordneten Ausrichtabschnitte einen Abstand haben, der groß genug ist, dass sich der Displayschutz in Displaynormalenrichtung betrachtet ungehindert zwischen den Ausrichtabschnitten hindurchbewegen kann.

In einem Fall, in dem der Ausrichtabschnitt ein um den Displayschutz umlaufender, geschlossener Ausrichtabschnitt ist, ist eine gesamte Umfangskontur des Displayschutzes in dem Ausrichtabschnitt mittels dem Abstand abgebildet.

Ferner können konkave Radien einer Kontur von Ausrichtabschnitten der Montagevorrichtung kleiner ausgeführt sein, als entsprechende konvexe Radien des Displayschutzes, und können als Ausrichtverbindungsbereiche dienen.

Damit kann verhindert werden, dass der Displayschutz während dem Fügen in seiner Bewegung gehindert wird. Somit wird ein präzises Fügen ermöglicht. Außerdem werden für die Fertigung Toleranzen bezüglich der Position und der Form der konkaven Radien erlaubt. Das reduziert die Fertigungskosten.

Beispielsweise kann ein Umfang eines Displayschutzes in der Fügeebene vier Ecken aufweisen und ansonsten aus geraden Kanten bestehen. Die Kanten können mittels Radien verrundet sein und Eckradien bilden. Wenn der Displayschutz mittels der Ausrichtaussparung des Rahmens ausgerichtet wird, sind die entsprechenden Eckradien in der Ausrichtaussparung des Rahmens kleiner ausgeführt als die Eckradien des Displayschutzes.

Ferner kann in der Montagevorrichtung eine Mittelplatte, die parallel zu der Fügeebene innerhalb der Ausrichtaussparung angeordnet ist, mit dem Rahmen über Stege verbunden sein, sodass um die Mittelplatte herum geschwächte Bereiche entstehen.

Dadurch lässt sich der Rahmen leicht von dem Verbraucher selbst bereitstellen. Dazu muss lediglich die Mittelplatte aus dem Rahmen gelöst werden. Solange die Mittelplatte nicht aus dem Rahmen gelöst wird, verleiht sie dem Rahmen Steifigkeit. Beispielsweise während des Transports ist der Rahmen dadurch besser vor einer Beschädigung geschützt.

Durch den geschwächten Bereich wird verhindert, dass beim Lösen der Mittelplatte von dem Rahmen, der Rahmen selbst beschädigt wird. Dadurch entsteht weniger Ausschuss bei dem Anwender und die Anzahl an hergestellten Montagevorrichtungen kann reduziert werden. Somit kann die Montagevorrichtung ressourcenschonend hergestellt werden.

Eine Mittelplatte kann mit einem oder mehreren Stegen mit dem Rahmen verbunden sein.

Die Breite der Stege ist vorzugsweise 0.1 mm bis 1 mm. Die Breite der Stege ist vorzugsweise so gestaltet, dass sich die Mittelplatte mittels einer Handkraft aus dem Rahmen lösen lässt. Insofern hängt die Breite der Stege stark von dem Material des Rohteils, von der Dicke des Rohteils und von der Anzahl an Stegen ab, mit denen das Mittelteil mit dem Rahmen verbunden ist.

Der geschwächte Bereich kann auch ein umlaufender Steg ohne Lücken sein, der entsprechend dünn ist, wesentlich dünner als die Dicke des Rohteils.

Ferner kann in der Montagevorrichtung die Mittelplatte die Stützbauteile aufweisen, die mittels einem geschwächten Bereich über Stege an der Mittelplatte angebunden sein.

Dadurch wird Material verwertet, das ansonsten Ausschussmaterial wäre. Somit wird die Montagevorrichtung ressourcenschonend, ökologisch und kostengünstig hergestellt. Ferner reduziert sich der Materialverbrauch und der Platzbedarf. Dadurch reduziert sich auch der Lageraufwand.

Stützelemente können auch außerhalb des Rahmens in einem Ausschussmaterial mittels Stegen mit dem Ausschussmaterial verbunden sein, beispielsweise, wenn so viele oder so große Stützelemente benötigt werden, dass sie innerhalb der Mittelplatte keinen Platz finden.

Ferner können in der Montagevorrichtung die Stege in den konkaven Radien von Ausrichtaussparungen ausgeführt sein.

Bei dem Herauslösen von Elementen aus dem Rahmen bzw. dem Mittelteil, also beim Durchtrennen der Stege, können unsaubere Riss- und Bruchstrukturen entstehen. Diese Strukturen können das Fügen beeinträchtigen.

Außerdem können Materialpartikel wie Papierpartikel aus den Strukturen herausgelöst werden. Diese Materialpartikel können sich auf der Seite des Displayschutzes anlagern, der in Kontakt mit dem Display kommt, wenn die Stege ungünstig positioniert sind. Wenn Materialpartikel während dem Fügen zwischen dem Display und dem Displayschutz eingeschlossen werden, kann dies zu Blasen und nicht anliegenden Bereichen zwischen dem Display und dem Displayschutz führen.

Wenn die konkaven Radien von Ausrichtaussparungen kleiner ausgeführt sind als die entsprechenden konvexen Radien des Displayschutzes, dann nimmt die Entfernung von der Ausrichtaussparung zu dem Displayschutz von dem Ansatz eines konkaven Radius zu seinem mittleren Bereich hin zu. In dem mittleren Bereich des Radius ist der Abstand zwischen Ausrichtaussparung und Displayschutz am größten. In diesem Bereich kann ein Steg angeordnet sein. Das hat den Vorteil, dass ein Ansatz des Steges in dem Ausrichtabschnitt möglichst weit weg von dem Displayschutz ist. Sollte während dem Herauslösen der Mittelplatte ein Rest des Steges an dem Ausrichtabschnitt verbleiben, stört das die Bewegung des Displayschutzes während dem Fügen nicht. Außerdem können Einschlüsse vermieden werden und ein Fügen mit hoher Präzision wird ermöglicht.

Vorzugsweise ist auch ein Ansatz des Steges in der Mittelplatte außerhalb der Kontur des Displayschutzes, betrachtet aus einer Displaynormalenrichtung.

Vorzugsweise sind die Ansätze des Steges nicht in den Ausrichtabschnitten bzw. Displayausrichtabschnitten angeordnet.

Ferner kann in der Montagevorrichtung die Ausrichtaussparung zusätzliche Aussparungen beinhaltet, die sich im Wesentlichen parallel zu der Fügeebene von der Ausrichtaussparung nach außen erstrecken und an deren Enden sich die Stege befinden.

Beispielsweise können dies zusätzlichen Aussparungen in einer flachen bzw. sanften V-Form von dem Displayschutz weg nach außen erstrecken, so dass eine Spitze der V-Form einen Bereich bildet, in dem der Abstand zwischen der Ausrichtaussparung bzw. zusätzlichen Aussparung zu dem Displayschutz größer ist, als in den verbleibenden Bereichen der V-Form. Sanft bedeutet in diesem Zusammenhang, dass sich die V-Form, mit einem ebenen Ausrichtabschnitt oder Displayausrichtabschnitt einen großen stumpfen Winkel einschließt.

Eine V-Form kann vorzugsweise 0,3-1,0 mm von der Ausrichtaussparung nach außen hin zurückspringen. Dadurch wird verhindert, dass der Displayschutz in dem Bereich der V-Form beim Fügen hängenbleibt. Somit wird die Handhabung für den Anwender erleichtert und ein Fügen ist mit hoher Präzision möglich.

Die Form des Rücksprungs kann beispielsweise auch eine gebogene Form sein.

Ferner können in der Montagevorrichtung die zusätzlichen Aussparungen als Aufnahmeabschnitte verwendet werden, mit denen die Eingreifabschnitte der Stützbauteile in Eingriff gebracht werden können.

Bei dieser alternativen Form des Rücksprungs ist der Rücksprung deutlich größer als bei einer V-Form, beispielsweise in einem Bereich von 5 mm oder mehr, so dass der Rücksprung als Aufnahmeabschnitt für einen Eingreifabschnitt von Stützbauteilen verwendet werden kann.

In diesem Fall kann der Rücksprung eine Form haben, die der des Eingreifabschnittes angepasst ist.

In diesem Fall können die Stege an den Stellen des Rücksprungs positioniert sein, die am weitesten von dem Displayschutz oder dem Display entfernt sind.

Ferner kann in der Montagevorrichtung die Mittelplatte ein Ausstreichelement aufweisen, das mittels einem geschwächten Bereich über Stege in der Mittelplatte vorgesehen ist und zumindest auf einer Seite in der Querrichtung oder Längsrichtung eine ebene Fläche hat.

Das Ausstreichelement dient dazu, mit der geraden Kante nach dem Fügen des Displayschutzes unter Druckbeaufschlagung über den Displayschutz zu streichen. Dadurch werden gegebenenfalls eingeschlossene Luftblasen zwischen dem Displayschutz und dem Display entfernt. Das verbessert die Handhabung des Displayschutzes für den Anwender. Außerdem wird somit Material verwendet, das ansonsten Ausschussmaterial wäre. Eine zusätzliche Herstellung von Ausstreichelementen kann somit entfallen. Somit trägt die Montagevorrichtung zur Schonung von Ressourcen bei.

Die Form des Ausstreichelementes kann beispielsweise im Wesentlichen quadratisch oder rechteckig sein. Das hat den Vorteil, dass teilweise bereits vorhandene geschwächte Bereiche dafür genutzt werden können das Ausstreichelement aus der Mittelplatte herauszulösen. Dadurch kann die Montagevorrichtung günstig hergestellt werden.

Bei sämtlichen Elementen, die aus der Ausrichtaussparung, der Mittelplatte, dem Ausrichtelement oder Ausschussmaterial außerhalb des Rahmens herausgelöst werden können geschwächte Bereiche für mehrere Elemente verwendet werden und dadurch Herstellungskosten gespart werden.

Die Form des Ausstreichelementes kann beispielsweise auch im Wesentlichen eine Dreiecksform aufweisen. Dabei greift der Anwender das Ausstreichelement an einer Ecke und verwendet die gegenüberliegende Kante zum Abstreichen. Wenn sie die Ecke, an der der Anwender angreift, mittig zu der gegenüberliegenden Kante befindet, wie beispielsweise bei einem gleichschenkligen Dreieck, hat das den Vorteil, dass die Kraft, die von dem Anwender in das Ausstreichelement eingeleitet wird, gleichmäßig auf die gegenüberliegende Kante übertragen wird. Dem Anwender wird somit eine Handhabung des Ausstreichelementes erleichtert und Blasenbildung zwischen dem Displayschutz und dem Display kann wirksam verhindert werden. Dadurch ist ein Fügen mit hoher Präzision möglich.

Ferner kann in der Montagevorrichtung das Ausstreichelement die Stützbauteile aufweisen, die mittels einem geschwächten Bereich über Stege an dem Ausstreichelement angebunden sind.

Dadurch ist es möglich, das Ausstreichelement möglichst groß zu gestalten. Beispielsweise kann das Ausstreichelement eine Breite aufweisen, die der Breite eines Displayschutzes entspricht. Dadurch kann mit einer Abstreichbewegung quer zu der Breite der gesamte Displayschutz so bearbeitet werden, dass eingeschlossene Luftblasen zwischen dem Display und den Displayschutz entfernt werden.

Das Ausstreichelement kann auch nur einzelne Stützbauteile aufweisen.

Ferner kann in der Montagevorrichtung das Ausstreichelement so positioniert sein, dass es einen entgegen der Displaynormalenrichtung vorstehenden Bereich des Geräts auf einer Unterseite des Geräts überdeckt, betrachtet aus der Displaynormalenrichtung, wenn das Gerät mit der Montagevorrichtung positioniert ist.

Ein solcher entgegen der Displaynormalenrichtung vorstehender Bereich auf der Unterseite des Geräts kann beispielsweise eine Kameralinse oder Kameraeinheit des Geräts sein. Wird das Gerät auf der Unterseite abgelegt und die Montagevorrichtung auf das Gerät aufgesetzt, kann das Gerät instabil liegen und während dem Fügen bezüglich einem Untergrund verkippen. Somit kann die Fügeebene während einem Fügen verkippen, was für ein Fügen mit hoher Präzision sehr hinderlich ist.

Wenn das Ausstreichelement entsprechend positioniert ist, kann die Mittelplatte, nachdem zumindest das Ausstreichelement herausgelöst ist so positioniert werden, dass eine Unterseite des Geräts flächig auf der Mittelplatte aufliegt, wobei die vorstehenden Bereiche in die Aussparung, die durch das Herauslösen des Ausstreichelementes erzeugt ist, der Mittelplatte hineinragt. Somit kann ein Verkippen der Fügeebene wirksam verhindert werden. Das mit der Montagevorrichtung positionierte Gerät steht dann stabil auf dem Untergrund und ein Fügen mit hoher Präzision wird ermöglicht.

Dabei kann die Mittelplatte, die auf der Unterseite des Geräts positioniert wird abgesehen von dem Kamerabereich, betrachtet aus der Displaynormalenrichtung, die Außenkontur des Displayschutzes aufweisen.

Die Dicke der Mittelplatte kann so gewählt werden, dass sie größer ist, als der Betrag um den der vorstehende Bereich von der Unterseite des Geräts vorsteht.

Ferner können in der Montagevorrichtung die Stützbauteile so gestaltet sein, dass in Displaynormalenrichtung untere Enden der Stützbauteile nicht weiter vorragen, als eine Unterseite des Geräts oder eine Unterseite der Mittelplatte, wenn das Gerät mit der Montagerichtung positioniert ist und die Stützbauteile mit dem Rahmen in Eingriff sind.

Dadurch wird erreicht, dass die Stützbauteile keinen Kontakt zu dem Untergrund haben, auf dem das Gerät, bzw. die Mittelplatte gelegt werden, um das Gerät mit der Montagevorrichtung zu positionieren und den Displayschutz zu fügen. Das bedeutet, dass der Abstützabschnitt oder Ausrichtabschnitt der Montagevorrichtung nicht den Kontakt zu dem Display bzw. dem Gerät verliert, wenn die Montagevorrichtung mit Gerät und gegebenenfalls mit Mittelplatte für ein Fügen auf einem im Wesentlichen ebenen Untergrund positioniert werden. Anders ausgedrückt entsteht kein Spalt zwischen dem Ausrichtabschnitt und dem Display bzw. Gerät. Es wird somit verhindert, dass der Displayschutz bei einem Positionieren vorbei an einem Ausrichtabschnitt in solch einen Spalt hineinrutscht und somit eine ungewünschte Position relativ zu dem Display einnimmt. Dadurch wird ein Fügen mit hoher Präzision ermöglicht.

Ferner kann in der Montagevorrichtung die Mittelplatte zumindest ein Geräthalteelement aufweisen, das mittels einem geschwächten Bereich über Stege in der Mittelplatte vorgesehen ist und mittels dem das Gerät gehalten werden kann.

Es wird somit Restmaterial verwendet, um ein Geräthalteelement bereitzustellen. Dadurch die Herstellung eines separaten Geräthalteelementes entfallen und die Montagevorrichtung trägt zu einer Schonung der Ressourcen bei.

Mittels dem Geräthalteelemente kann das Gerät auf einem Untergrund so abgestellt werden, dass ein Anwender, vor dem das Gerät abgestellt ist, das Display gut sehen kann, ohne das Gerät selbst halten zu müssen.

Das Geräthalteelement kann beispielsweise dazu dienen, das Gerät auf einem ebenen Untergrund einen bestimmten Winkel relativ zu dem Untergrund zu halten. Beispielsweise ist dieser Winkel im Bereich von 50° bis 80°. In diesem Winkelbereich nimmt das Gerät eingesetzt in das Geräthalteelement eine für die Blickrichtung des Anwenders ergonomische Ausrichtung ein.

Ferner kann in der Montagevorrichtung ein Displayausrichtabschnitt Bedienelementaussparungen haben, die in einer Richtung parallel zu der Fügeebene vorstehende Bereiche des Geräts oder des Displays freilegen.

Dadurch kann sichergestellt werden, dass die Displayausrichtabschnitte nicht an vorstehenden Bereichen des Geräts oder des Displays hängen bleiben, wenn die Montagevorrichtung auf das Gerät, bzw. Display aufgesetzt wird. Somit wird ein Fügen mit hoher Präzision ermöglicht.

Solche vorstehenden Bereiche könne beispielsweise Bedientasten oder Abdeckelemente sein, beispielsweise für einen Kopfhörer- oder einen USB-Anschluss.

### Kurze Beschreibung der Abbildungen

Fig. 1 zeigt eine Draufsicht einer ersten Ausführungsform der Erfindung im nichtmontierten Zustand.
Fig. 2 zeigt eine isometrische Ansicht der ersten Ausführungsform der Erfindung im montierten Zustand.
Fig. 3 zeigt eine Draufsicht einer zweiten Ausführungsform der Erfindung.
Fig. 4 zeigt eine Draufsicht einer dritten Ausführungsform der Erfindung.
Fig. 5 zeigt eine Draufsicht einer vierten Ausführungsform der Erfindung.
Fig. 6 zeigt eine Draufsicht einer fünften Ausführungsform der Erfindung.

### Detaillierte Beschreibung der Ausführungsformen

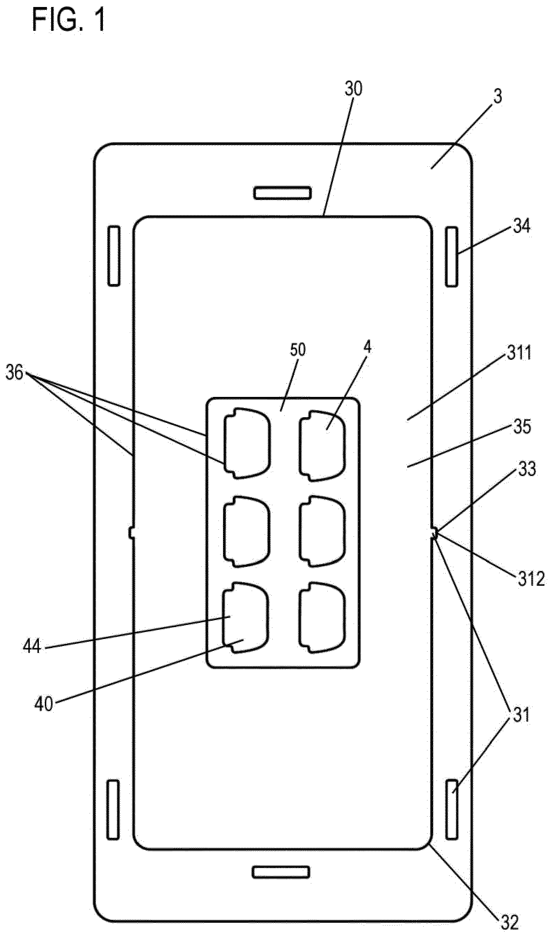

Fig. 1 zeigt eine Draufsicht, betrachtet aus der Displaynormalenrichtung Z, einer ersten Ausführungsform der Erfindung. In dieser Ausführungsform weist der Rahmen 3 sechs Aufnahmeabschnitte 34 auf. Jeweils ein Aufnahmeabschnitt 34 ist in der Längsrichtung X auf beiden Seiten der Ausrichtaussparung 311 mittig angeordnet. Jeweils zwei Aufnahmeabschnitte 34 sind in der Querrichtung Y auf beiden Seiten der Ausrichtaussparung angeordnet, jeweils mit einer sehr großen Entfernung zueinander in der Längsrichtung. Das hat den Vorteil, dass ein Moment zwischen dem Display und der Montagevorrichtung in der Fügeebene XY sehr gut durch die Stützbauteile 4 abgestützt werden kann.

Der Rahmen hat eine Rechteckige Außenkontur wobei Außenecken abgerundet sind.

Der Rahmen hat eine Rechteckige Ausrichtaussparung 311, wobei die Ecken der Aussparung in der Displaynormalenrichtung Z abgerundet sind. Die abgerundeten Ecken stellen Ausrichtverbindungsbereiche 32 dar. Die mit den abgerundeten Ecken verbundenen geraden Abschnitte stellen die Ausrichtabschnitte 30 dar.

Die Ausrichtabschnitte 30 und die Ausrichtverbindungsbereiche 32 stellen einen Offset einer Kontur eines Displayschutzes 1 dar. Das bedeutet, dass ein Displayschutz, betrachtet aus der Displaynormalenrichtung Z, eine kleinere Fläche aufweist, als die Ausrichtaussparung 311.

Auf beiden Seiten der Ausrichtaussparung 311 in der Querrichtung Y ist je eine zusätzliche Aussparung 312 angeordnet, die die Ausrichtaussparung 311 vergrößert, betrachtet aus der Displaynormalenrichtung Z, und dient als Rücksprung.

In der vorliegenden Ausführungsform hat dieser Rücksprung eine Tiefe von 0,5 mm. Der Rücksprung kann auch sanft von Ausrichtabschnitten 30 zurückspringen, beispielsweise in einem sehr stumpfen Winkel oder in einer gebogenen Form.

Innerhalb der Ausrichtaussparung 311 ist eine Mittelplatte 35 angeordnet und mittels einem geschwächten Bereich an dem Rahmen 3 angebunden. Der geschwächte Bereich ist ein umlaufender, durchgehender Schnitt, der lediglich an Stegen 33 unterbrochen ist. Die Stege 33 befinden sich in den in Querrichtung Y am weitesten entfernten Kanten der zusätzlichen Aussparungen 312.

Im Bereich der zusätzlichen Aussparungen 312 ragt die Mittelplatte 35 mit seiner in Querrichtung Y äußersten Kante über die in Längsrichtung X ausgerichteten Ausrichtabschnitte 30 hinaus in Querrichtung Y nach außen vor. Anders ausgedrückt, ragen die Stege 33 aus den zusätzlichen Aussparungen 312 in der Querrichtung nicht über die die in Längsrichtung angeordneten Ausrichtabschnitte 30 nach innen vor.

Das hat den Vorteil, dass die Stege 33 ein Fügen eines Displayschutzes 1 nicht stören, egal an welcher Stelle die Stege brechen, wenn die Mittelplatte 35 aus dem Rahmen 3 gelöst wird.

Innerhalb der Mittelplatte 35 ist ein Ausstreichelement 50 mittels einem geschwächten Bereich mit der Mittelplatte 35 verbunden. Das Ausstreichelement 50 kann aus der Mittelplatte 35 mittels Handkraft gelöst werden.

Innerhalb des Ausstreichelements 50 sind sechs Stützbauteile 4 mittels einem geschwächten Bereich mit dem Ausstreichelement 50 verbunden. Die Stützbauteile 4 können mittels Handkraft aus dem Ausstreichelement 50 gelöst werden.

Die Stützbauteile 4 haben jeweils einen Displayausrichtabschnitt 40 und einen Eingreifabschnitt 44 auf beiden Seiten in Displaynormalenrichtung Z. Das hat den Vorteil, dass bei einem In-Eingriff-Bringen der Stützbauteile 4 mit den Aufnahmeabschnitten 34 des Rahmens 3 nicht auf eine Ausrichtung eines Displayausrichtabschnittes 40 geachtet werden muss, da die Stützbauteile 4 auf beiden Seiten in Querrichtung Y der Ausrichtaussparung 311 in die Aufnahmeabschnitte 34 eingesetzt werden können. Dadurch ist ein Zusammenbauen der Montagevorrichtung sehr einfach.

Ferner sind alle sechs Stützbauteile 4 identisch ausgestaltet. Somit kann jeder der sechs Stützbauteile 4 in jedes der sechs Aufnahmeabschnitte 34 eingesetzt werden. Dadurch ist ein Zusammenbau der Montagevorrichtung sehr einfach.

Der Rahmen 3, die Mittelplatte 35, das Ausstreichelement 50 und die Stützbauteile 4 bestehen aus dem gleichen flachen plattenförmigen Rohmaterial und haben die gleiche Dicke in Displaynormalenrichtung Z. Dadurch können mehrere Montagevorrichtungen sehr platzsparend gelagert werden. Außerdem wird ein Materialbedarf für die Herstellung der Montagevorrichtung reduziert, was die Herstellungskosten senkt und zu einem schonenden Umgang mit den natürlichen Ressourcen beiträgt.

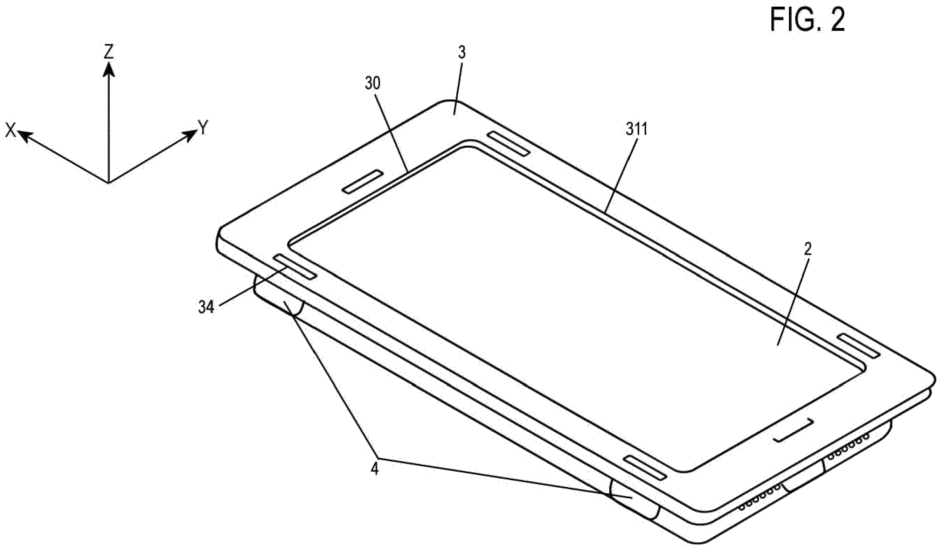

Fig. 2 zeigt eine isometrische Ansicht der Montagevorrichtung der ersten Ausführungsform, wobei die zusätzlichen Aussparungen 312 nicht dargestellt sind. In Fig. 2 ist die Mittelplatte 35 aus dem Rahmen 3 gelöst. Die Eingreifabschnitte 44 der Stützbauteile 4 sind entgegen der Displaynormalenrichtung Z in die Aufnahmeabschnitte 34 des Rahmens 3 eingesteckt und somit mit dem Rahmen 3 in Eingriff, bzw. verbunden. Dabei stehen die Stützbauteile 4 aus dem Rahmen zumindest entgegen der Displaynormalenrichtung Z vor.

Die Montagevorrichtung ist auf ein Gerät mit Display 2 so aufgesetzt, dass Displayausrichtabschnitte 40 mit dem Gerät in Berührung sind und das Display 2 die Montagevorrichtung in Displaynormalenrichtung Z stützt. Anders ausgedrückt, berühren sich Display 2 und Rahmen 3 auf der in Displaynormalenrichtung unteren Seite des plattenförmigen Rahmens 3. Die untere Seite des Rahmens 3 stellt einen Abstützabschnitt bereit.

Die Aussparungen der Aufnahmeabschnitte 34 sind so positioniert, dass sie, betrachtet aus einer Displaynormalenrichtung Z, gemeinsam mit den dem Gerät zugewandten Displayausrichtabschnitten 40 der Stützbauteile 4 mit der Außenkontur des Geräts fluchten.

Wenn ein Display mit der Montagevorrichtung positioniert ist, sind Montagevorrichtung und Display 2 über den Abstützabschnitt und die Displayausrichtabschnitte 40 in allen drei Raumrichtung der Displaynormalenrichtung Z, der Längsrichtung X und der Querrichtung Y eindeutig relativ zu einander positioniert. Insbesondere wird ein Verschieben oder Verdrehen von Montagevorrichtung und Display 2 relativ zueinander wirksam verhindert.

Wenn ein Display 2 mit der Montagevorrichtung positioniert ist, kann ein Displayschutz an das Display 2 gefügt werden. Dazu wird der Displayschutz bezüglich der Fügeebene XY um die Querrichtung verkippt. Eine Seite des Umfangs des Displayschutzes 1 wird dann durch die Ausrichtaussparung 311 hindurch an dem Display 2 angelegt. Diesen Kontakt beibehaltend wird die Seite des Umfangs des Displayschutzes 1 mit dem in Längsrichtung X liegenden Ausrichtabschnitt 30 in Anlage gebracht. Anschließend wird der Displayschutz bezüglich der in Längsrichtung X ausgerichteten Ausrichtabschnitte 30 ausgerichtet. Dann kann der Displayschutz unter Beibehaltung dieser Anlagestellen in die Fügeebene XY gekippt werden. Dadurch legt sich der Displayschutz in größer werdenden Bereichen an dem Display 2 an. Wenn der Displayschutz parallel zu der Fügeebene XY ausgerichtet ist und flächig an dem Display 2 anliegt, ist der Fügeprozess abgeschlossen.

Es kann anschließend das Ausstreichelement 50 verwendet werden um Luftblasen, die sich möglicherweise zwischen dem Display 2 und dem Displayschutz gebildet haben, aus dem Kontaktbereich von Display 2 und Displayschutz herauszustreichen. Dazu wird das Ausstreichelement 50 mit einer ebenen Seite seines Umfanges, betrachtet aus der Displaynormalenrichtung Z, auf dem Displayschutz vor einer Luftblase aufgelegt und mit dem Ausstreichelement 50 Druck auf den Displayschutz ausgeübt. Währenddessen wird das Ausstreichelement 50 zu der Luftblase hin bewegt. Die Luftblase wird dann, wenn der Druck entsprechend aufgebracht ist, vor einer Kante des Ausstreichelements 50 hergeschoben, bis die Luftblase ein Ende des Kontaktbereiches zwischen dem Displayschutz 1 und dem Display 2 erreicht und aus dem Kontaktbereich entweicht.

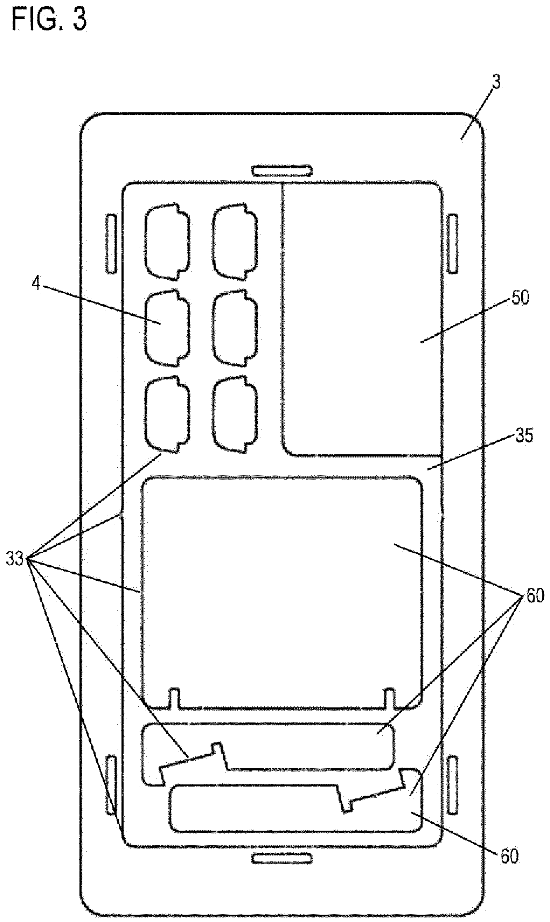

In Fig. 3 ist eine zweite Ausführungsform der vorliegenden Erfindung aus der Displaynormalenrichtung Z dargestellt. Die zweite Ausführungsform unterscheidet sich von der ersten Ausführungsform dadurch, dass die Stützbauteile 4 mittels geschwächten Bereichen an der Mittelplatte 35 angebunden sind und nicht mehr innerhalb des Ausstreichelementes 50 an dem Ausstreichelement 50 angebunden sind.

Ferner weist die Montagevorrichtung zusätzlich Bauteile für ein Geräthalteelement 60 auf, die mittels geschwächten Bereichen innerhalb der Mittelplatte 35 mit der Mittelplatte 35 verbunden sind.

Ferner ist das Ausstreichelement 50 an eine Position in dem äußersten Bereich der Mittelplatte in der Querrichtung Y und der Längsrichtung X angeordnet. In diesem Bereich befindet sich in dem Gerät, wenn es mit der Montagevorrichtung positioniert ist, eine Kamera, die einen entgegen die Displaynormalenrichtung Z vorstehenden Bereich darstellt. Dadurch kann zumindest in dem Bereich in Längsrichtung X und Querrichtung Y für das Ausstreichelement 50 und die Mittelplatte 35 derselbe geschwächte Bereich verwendet werden um das Ausstreichelement 50 und die Mittelplatte 35 von dem Rahmen 3 zu lösen. Dadurch können die Herstellungskosten reduziert werden.

Ist das Ausstreichelement 50 und weitere Elemente bzw. Bauteile wie die Stützbauteile 4 oder die Bauteile für das Geräthalteelement 60 aus der Mittelplatte 35 gelöst, kann die Mittelplatte 35 entgegen der Displaynormalenrichtung Z unter dem Gerät so positioniert werden, dass die Kamera in den Bereich vorsteht, aus dem das Ausstreichelement 50 aus der Mittelplatte 35 herausgelöst ist.

Somit liegt die Unterseite des Geräts flächig auf der Mittelplatte 35 auf und der Untergrund, die Mittelplatte 35, das Display 2 und die Fügeebene XY sind im Wesentlichen parallel zueinander.

Das hat den Vorteil, dass das Gerät mit positionierter Montagevorrichtung stabil auf dem Untergrund aufliegen und während dem Fügen nicht kippeln kann. Dadurch wird ein präzises Fügen ermöglicht.

Das Geräthalteelement 60 besteht aus zwei identischen Fußbauteilen und einem Lehnenbauteil. Die beiden Fußbauteile können mit dem Lehnenbauteil über Eingreifabschnitte in Eingriff gebracht werden. Ist das Gerät in das Geräthalteelement 60 eingesetzt, wird es von dem Geräthalteelement 60 in einem Winkel zu dem Untergrund gehalten, den das Lehnenbauteil mit dem Untergrund einschließt. In der vorliegenden Ausführungsform ist dieser Winkel 75°.

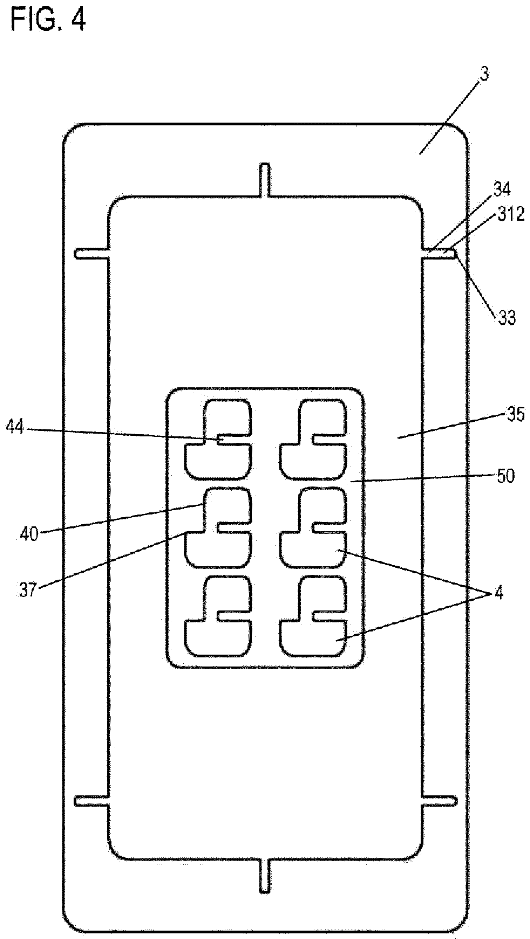

In Fig. 4 ist eine dritte Ausführungsform der vorliegenden Erfindung aus der Displaynormalenrichtung Z dargestellt. Die dritte Ausführungsform unterscheidet sich von der ersten Ausführungsform dadurch, dass die Stützbauteile 4 eine andere Form haben und die Aufnahmeabschnitte 34 anders positioniert sind.

Die Aufnahmeabschnitte 34 sind so in dem Rahmen angeordnet, dass sie in die Ausrichtaussparung 311 münden. Aufnahmeabschnitte 34 und zusätzliche Aussparungen 312 sind somit identisch. Anders ausgedrückt dienen die Aufnahmeabschnitte 34 der Ausrichtaussparung 311 als zusätzliche Ausrichtabschnitte 312.

Die Stege 33, über die die Mittelplatte 35 mit dem Rahmen 3 verbunden sind, sind in Querrichtung Y an den äußersten Enden der Aufnahmeabschnitte 34 angeordnet. Dadurch kann verhindert werden, dass Reste des Steges 33, nach einem Herauslösen der Mittelplatte 35 in der Ausrichtaussparung 311 verbleiben, die für das Fügen des Displayschutzes 1 auf das Display 2 benötigt wird. Außerdem befinden sich die Stege 33 so weit weg von der Ausrichtaussparung 311, in der das Fügen stattfindet, dass es sehr unwahrscheinlich ist, dass Partikel aus dem getrennten Steg 33 während dem Fügen zwischen den Displayschutz und das Display 2 gelangen.

In dieser Ausführungsform werden die Stützbauteile 4 von der Ausrichtaussparung 311 aus mit ihren Eingreifabschnitten 44 nach in der Längsrichtung X bzw. der Querrichtung Y außen in die Aufnahmeabschnitte 34 des Rahmens eingeschoben und Flächen, die als Abstützelemente 37 dienen können, werden entgegen der Displaynormalenrichtung Z ausgerichtet. Wenn die Stützbauteile 4 mit dem Rahmen 3 in Eingriff sind, stehen die Stützbauteile 4 auf beide Seiten von dem Rahmen 3 in Displaynormalenrichtung X vor.

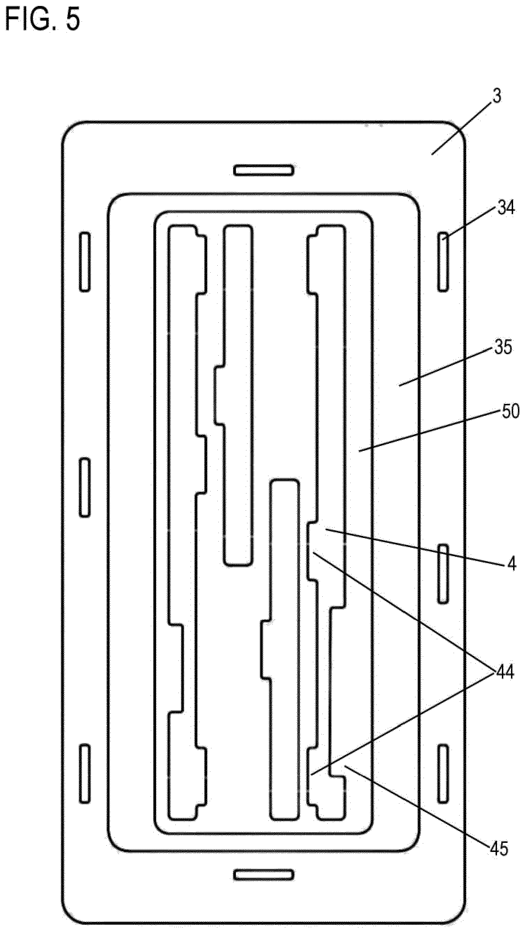

In Fig. 5 ist eine vierte Ausführungsform der vorliegenden Erfindung aus der Displaynormalenrichtung Z dargestellt. Die vierte Ausführungsform unterscheidet sich von der ersten Ausführungsform dadurch, dass Stützbauteile 4 anders geformt sind und die Aufnahmeabschnitte 34 an unterschiedlichen Positionen und in unterschiedlicher Anzahl in dem Rahmen vorgesehen sind.

In der vorliegenden Ausführungsform sind vier Stützbauteile 4 in einem Ausstreichelement 50 mittels einem geschwächten Bereich mit dem Ausstreichelement 50 verbunden. Die Stützbauteile 4 unterscheiden sich voneinander in ihrer Form. Es sind zwei kurze Stützbauteile 4 vorgesehen, die auf beiden Seiten der Ausrichtaussparung 311 in der Längsrichtung X mit dem Rahmen 3 in Eingriff kommen. Jedes kurze Stützbauteil 4 weist einen Eingreifabschnitt 44 auf.

Es sind zwei lange Stützbauteile 4 vorgesehen, die auf beiden Seiten in der Querrichtung Y mit dem Rahmen 3 in Eingriff kommen. Jedes lange Stützbauteil 4 weist drei Eingreifabschnitte 44 auf. Außerdem weisen die langen Stützbauteile 4 unterschiedlich geformte Bedienelementaussparungen 45 auf.

Die Stützbauteile 4 werden mit ihren Eingreifabschnitten 44 in die Aufnahmeabschnitte 34 eingesteckt. Dabei können benachbarte Stützbauteile 4 miteinander in Eingriff kommen und sich gegenseitig stützen.

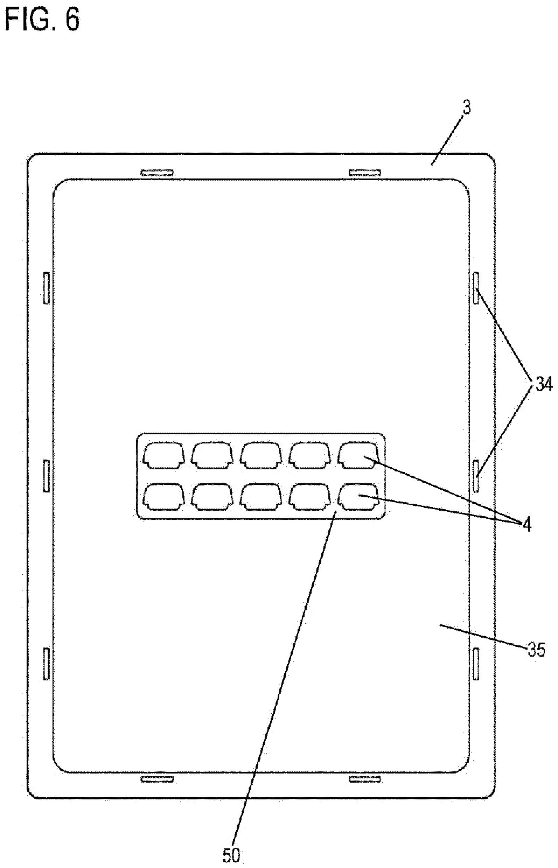

In Fig. 6 ist eine fünfte Ausführungsform der vorliegenden Erfindung aus der Displaynormalenrichtung Z dargestellt. Die fünfte Ausführungsform unterscheidet sich von der ersten Ausführungsform dadurch, dass der Rahmen 3 größer ist und mehr Stützbauteile 4 und Aufnahmeabschnitte 34 in dem Rahmen 3 vorgesehen sind.

Bei der vorliegenden Ausführungsform handelt es sich um eine Montagevorrichtung für ein großes Gerät, beispielsweise einem Tablet oder Phablet. Dementsprechend sind zehn Stützbauteile 4 vorgesehen und 10 Aufnahmeabschnitte um den Ausrichtabschnitt 311 herum in der Längsrichtung X und der Querrichtung Y verteilt, um eine Relativposition von Display 2 und Montagevorrichtung während dem Fügen zu gewährleisten.

## Patentansprüche

1. Montagevorrichtung für ein Fügen eines Displayschutzes (1) auf ein Display (2) eines Geräts, wobei die Montagevorrichtung beinhaltet:
einen Rahmen (3), der so gestaltet ist, dass der Displayschutz (1) auf einer Seite und das Gerät mit Display (2) auf einer anderen Seite so mit dem Rahmen (3) positionierbar ist, dass der Rahmen (3) während des Fügens den Displayschutz (1) und das Display (2) und/oder das Gerät berührt,
wobei der Rahmen (3) Aussparungen (31) aufweist, wobei
zumindest eine Aussparung (31) eine Ausrichtaussparung (311) ist, die zumindest einen Ausrichtabschnitt (30) aufweist, der dazu dient, den Displayschutz (1) auszurichten und hierzu in Kontakt mit dem Displayschutz (1) bringbar ist, und
zumindest eine Aussparung (31) ein Aufnahmeabschnitt (34) ist, und
ein Stützbauteil (4), das zu einer Seite vorsteht,
wobei das Stützbauteil (4)
zumindest einen Displayausrichtabschnitt (40) aufweist, der bezüglich dem Ausrichtabschnitt (30) ausgerichtet ist, wenn das zumindest eine Stützbauteil (4) in Eingriff mit dem Rahmen (3) ist, und der dazu dient, ein Display (2) oder das Gerät auszurichten und hierzu in Kontakt mit dem Display (2) oder dem Gerät bringbar ist,
**dadurch gekennzeichnet, dass**
das Stützbauteil (4) mittels einem Eingreifabschnitt (44) mit dem Aufnahmeabschnitt (34) in Eingriff bringbar ist und die Montagevorrichtung mehrere Stützbauteile (4) hat.

2. Montagevorrichtung nach Anspruch 1, wobei eine Ausrichtaussparung (311) größer ist, als der auf das Display (2) gefügte Displayschutz (1), aus einer Displaynormalenrichtung (Z) betrachtet, die eine Richtung ist, die senkrecht zu dem Display (2) steht, wenn das Gerät mit dem Rahmen positioniert ist.

3. Montagevorrichtung nach Anspruch 1 oder 2, wobei Ausrichtabschnitte (30) über einen Ausrichtverbindungsbereich (32) verbunden sind.

4. Montagevorrichtung nach einem der Ansprüche 1 bis 3, wobei Stützbauteile (4) über einen Stützverbindungsbereich miteinander verbunden sind, der bevorzugt aus Eingreifabschnitten (44) von verbundenen Stützbauteilen (4) besteht.

5. Montagevorrichtung nach einem der Ansprüche 1 bis 4, wobei, bezogen auf das mit der Montagevorrichtung positionierte Gerät oder auf den Displayschutz (1), mindestens ein Displayausrichtabschnitt (40) bzw. ein Ausrichtabschnitt (30) auf beiden Seiten in einer Längsrichtung (X), welches eine Richtung ist, in der das Gerät die größte Erstreckung aufweist und senkrecht zu der Displaynormalenrichtung (Z) ist, und auf beiden Seiten in einer Querrichtung (Y) vorhanden ist, die senkrecht zu der Längsrichtung (X) und der Displaynormalenrichtung (Z) ist.

6. Montagevorrichtung nach einem der Ansprüche 1 bis 5, wobei der Rahmen (3) eine Plattenform hat und die eine Seite eine Plattenoberseite und die andere Seite eine Plattenunterseite ist.

7. Montagevorrichtung nach Anspruch 6, wobei die Montagevorrichtung auf der Plattenunterseite oder in Stützbauteilen einen Abstützabschnitt aufweist, so dass sich die mit dem Gerät positionierte Montagevorrichtung auf dem Display (2) oder auf dem Gerät abstützt, wobei der Abstützabschnitt eine Fügeebene (XY) bildet, in der die Längsrichtung (X) und die Querrichtung (Y) liegen.

8. Montagevorrichtung nach Anspruch 6 oder 7, wobei sich die Aussparungen (31) von der einen Seite zu der anderen Seite erstrecken.

9. Montagevorrichtung nach Anspruch 8, wobei das Display (2) des mit der Montagevorrichtung positionierten Geräts dem Displayschutz (1) als ein zusätzlicher Ausrichtabschnitt dient.

10. Montagevorrichtung nach Anspruch 8, wobei die Ausrichtaussparung (311) oder Stützbauteile (4), aus der Displaynormalenrichtung (Z) betrachtet, eine Kontur des Displayschutzes (1) mit einem Offset nach außen parallel zu der Fügeebene (XY) aufweist.

11. Montagevorrichtung nach Anspruch 10, wobei konkave Radien einer Kontur von Ausrichtabschnitten (30) kleiner ausgeführt sind, als entsprechende konvexe Radien des Displayschutzes (1), und als Ausrichtverbindungsbereiche (32) dienen.

12. Montagevorrichtung nach Anspruch 6, wobei eine Mittelplatte (35), die parallel zu der Fügeebene (XY) innerhalb der Ausrichtaussparung (311) angeordnet ist, mit dem Rahmen (3) über Stege (33) verbunden ist, sodass um die Mittelplatte (35) herum geschwächte Bereiche (36) entstehen, wobei die Mittelplatte (35) bevorzugt die Stützbauteile (4) aufweist, die mittels einem geschwächten Bereich (36) über Stege (33) an der Mittelplatte (35) angebunden sind.

13. Montagevorrichtung nach Anspruch 12, wobei die Stege (33) in den konkaven Radien von Ausrichtaussparungen (311) ausgeführt sind.

14. Montagevorrichtung nach Anspruch 12, wobei die Ausrichtaussparung (311) zusätzliche Aussparungen (312) beinhaltet, die sich parallel zu der Fügeebene (XY) von der Ausrichtaussparung (311) nach außen erstrecken und an deren Enden sich die Stege (33) befinden, wobei die zusätzlichen Aussparungen (312) bevorzugt als Aufnahmeabschnitte (34) der Stützbauteile (4) verwendet werden, mit denen die Eingreifabschnitte (44) in Eingriff gebracht werden können.

15. Montagevorrichtung nach Anspruch 12, wobei die Mittelplatte (35) ein Ausstreichelement (50) aufweist, das mittels einem geschwächten Bereich (36) über Stege (33) in der Mittelplatte (35) vorgesehen ist und zumindest auf einer Seite in der Querrichtung (Y) oder Längsrichtung (X) eine ebene Fläche hat, wobei das Ausstreichelement (50) bevorzugt die Stützbauteile (4) aufweist, die mittels einem geschwächten Bereich (36) über Stege (33) an dem Ausstreichelement (50) angebunden sind.

16. Montagevorrichtung nach Anspruch 15, wobei das Ausstreichelement (50) so positioniert ist, dass es einen entgegen der Displaynormalenrichtung (Z) vorstehenden Bereich des Geräts auf einer Unterseite des Geräts überdeckt, betrachtet aus der Displaynormalenrichtung (Z), wenn das Gerät mit der Montagevorrichtung positioniert ist.

17. Montagevorrichtung nach Anspruch 6, wobei die Stützbauteile (4) so gestaltet sind, dass in Displaynormalenrichtung (Z) untere Enden der Stützbauteile (4) nicht weiter vorragen als eine Unterseite des Geräts oder eine Unterseite der Mittelplatte (35), wenn das Gerät mit der Montagevorrichtung positioniert ist und die Stützbauteile (4) mit dem Rahmen (3) in Eingriff sind.

18. Montagevorrichtung nach Anspruch 12, wobei die Mittelplatte (35) zumindest ein Gerätehalteelement (60) aufweist, das mittels einem geschwächten Bereich (36) über Stege (33) in der Mittelplatte (35) vorgesehen ist und mittels dem das Gerät gehalten werden kann.

19. Montagevorrichtung nach einem der Ansprüche 1 bis 18, wobei ein Displayausrichtabschnitt (40) Bedienelementaussparungen (45) hat, die in einer Richtung parallel zu der Fügeebene (XY) vorstehende Bereiche des Geräts oder des Displays (2) freilegen.

## Claims

1. A mounting device for joining a display protector (1) onto a display (2) of an apparatus, the mounting device including:
a frame (3) which is configured such that the display protector (1) on one side and the apparatus having the display (2) on the other side are positionable with the frame (3) such that the frame (3) touches the display protector (1) and the display (2) and/or the apparatus during the joining,
the frame (3) comprising cut-outs (31), wherein
at least one cut-out (31) is an alignment cut-out (311) which comprises at least one alignment portion (30) serving to align the display protector (1) and, to this end, being contactable with the display protector (1), and
at least one cut-out (31) is an accommodating portion (34), and
a supporting member (4) that projects toward one side,
wherein the supporting member (4)
comprises at least one display alignment portion (40) which is aligned with respect to the alignment portion (30) when the at least one supporting member (4) is engaged with the frame (3), and which serves to align a display (2) or the apparatus and, to this end, is contactable with the display (2) or the apparatus,
**characterized in that**
the supporting member (4) is engageable with the accommodating portion (34) by means of an engaging portion (44) and the mounting device has a plurality of supporting members (4).

2. The mounting device according to claim 1, wherein an alignment cut-out (311) is larger than the display protector (1) joined onto the display (2), viewed from a display normal direction (Z), which is a direction perpendicular to the display (2) when the apparatus is positioned with the frame.

3. The mounting device according to claim 1 or 2, wherein alignment portions (30) are connected via an alignment connecting region (32).

4. The mounting device according to any one of claims 1 to 3, wherein supporting members (4) are connected to each other via a supporting connection region, which preferably consists of engaging portions (44) of connected supporting members (4).

5. The mounting device according to any one of claims 1 to 4, wherein, relative to the apparatus positioned with the mounting device or to the display protector (1), at least one display alignment portion (40) or alignment portion (30) is present on both sides in a longitudinal direction (X), which is a direction in which the apparatus has the largest extension and is perpendicular to the display normal direction (Z), and is present on both sides in a transverse direction (Y), which is perpendicular to the longitudinal direction (X) and the display normal direction (Z).

6. The mounting device according to any one of claims 1 to 5, wherein the frame (3) has a plate form, and the one side is a plate upper side and the other side is a plate bottom side.

7. The mounting device according to claim 6, wherein the mounting device comprises a supporting portion on the plate bottom side or in supporting members, so that the mounting device positioned with the apparatus is supported on the display (2) or on the apparatus, wherein the supporting portion forms a joining plane (XY) in which the longitudinal direction (X) and the transverse direction (Y) are located.

8. The mounting device according to claim 6 or 7, wherein the cut-outs (31) extend from the one side to the other side.

9. The mounting device according to claim 8, wherein the display (2) of the apparatus positioned with the mounting device serves as an additional alignment portion to the display protector (1).

10. The mounting device according to claim 8, wherein the alignment cut-out (311) or supporting members (4), viewed from the display normal direction (Z), comprise a contour of the display protector (1) having an offset outwardly in parallel to the joining plane (XY).

11. The mounting device according to claim 10, wherein concave radii of a contour of alignment portions (30) are configured to be smaller than corresponding convex radii of the display protector (1) and serve as alignment connecting regions (32).

12. The mounting device according to claim 6, wherein a central plate (35) which is arranged in parallel to the joining plane (XY) within the alignment cut-out (311) is connected to the frame (3) via webs (33), so that weakened areas (36) are created around the central plate (35), wherein the central plate (35) preferably includes the supporting members (4) which are bonded to the central plate (35) by means of a weakened area (36) via webs (33).

13. The mounting device according to claim 12, wherein the webs (33) are implemented in the concave radii of alignment cut-outs (311).

14. The mounting device according to claim 12, wherein the alignment cut-out (311) includes additional cut-outs (312) which extend outwardly from the alignment cut-out (311) in parallel to the joining plane (XY) and at the ends of which the webs (33) are located, wherein the additional cut-outs (312) are preferably used as accommodating portions (34) of the supporting members (4), with which the engaging portions (44) can be engaged.

15. The mounting device according to claim 12, wherein the central plate (35) comprises a smoothing-out member (50), which is provided in the central plate (35) by means of a weakened area (36) via webs (33) and which has a plane surface at least on one side in the transverse direction (Y) or the longitudinal direction (X), wherein the smoothing-out member (50) preferably comprises the supporting members (4), which are bonded to the smoothing-out member (50) by means of a weakened area (36) via webs (33).

16. The mounting device according to claim 15, wherein the smoothing-out member (50) is positioned so as to cover an area of the apparatus projecting contrary to the display normal direction (Z) on a bottom side of the apparatus, viewed from the display normal direction (Z), when the apparatus is positioned with the mounting device.

17. The mounting device according to claim 6, wherein the supporting members (4) are configured such that, in the display normal direction (Z), lower ends of the supporting members (4) do not project further than a bottom side of the apparatus or a bottom side of the central plate (35) when the apparatus is positioned with the mounting device and the supporting members (4) are engaged with the frame (3).

18. The mounting device according to claim 12, wherein the central plate (35) comprises at least one apparatus holding element (60) which is provided in the central plate (35) by means of a weakened area (36) via webs (33) and by means of which the apparatus can be held.

19. The mounting device according to any one of claims 1 to 18, wherein a display alignment portion (40) has operating element cut-outs (45) which expose projecting regions of the apparatus or of the display (2) in a direction parallel to the joining plane (XY).

## Revendications

1. Dispositif de montage destiné à assembler une protection d'écran (1) sur un écran (2) d'un appareil, le dispositif de montage renfermant :
un cadre (3), qui est conçu de telle sorte que la protection d'écran (1) peut être positionnée sur un côté et l'appareil avec écran (2) peut être positionné sur un autre côté avec le cadre (3) de telle sorte que le cadre (3) entre en contact avec la protection d'écran (1) et l'écran (2) et/ou l'appareil pendant l'assemblage,
le cadre (3) comportant des évidements (31),
au moins un évidement (31) étant un évidement d'alignement (311), qui comporte au moins une section d'alignement (30) servant à aligner la protection d'écran (1) et pouvant être amenée à cet effet en contact avec la protection d'écran (1), et
au moins un évidement (31) étant une section de réception (34), et
un composant de support (4), qui fait saillie vers un côté,
le composant de support (4)
comportant au moins une section d'alignement d'écran (40), qui est alignée par rapport à la section d'alignement (30) lorsque l'au moins un composant de support (4) est en prise avec le cadre (3) et qui sert à aligner un écran (2) ou l'appareil et qui peut être amené à cet effet en contact avec l'écran (2) ou l'appareil,
**caractérisé en ce que**
le composant de support (4) peut être amené en prise avec la section de réception (34) au moyen d'une section de prise (44) et le dispositif de montage a plusieurs composants de support (4).

2. Dispositif de montage selon la revendication 1, un évidement d'alignement (311) étant plus grand que la protection d'écran (1) assemblée sur l'écran (2), vu depuis une direction normale d'écran (Z), qui est une direction perpendiculaire à l'écran (2) lorsque l'appareil est positionné avec le cadre.

3. Dispositif de montage selon la revendication 1 ou 2, les sections d'alignement (30) étant reliées par une zone de liaison d'alignement (32).

4. Dispositif de montage selon l'une des revendications 1 à 3, des composants de support (4) étant reliés entre eux par une zone de liaison de support, qui est constituée de manière préférée de sections de prise (44) de composants de support (4) reliés.

5. Dispositif de montage selon l'une des revendications 1 à 4, au moins une section d'alignement d'écran (40) ou une section d'alignement (30) étant présente sur les deux côtés dans une direction longitudinale (X), qui est une direction dans laquelle l'appareil présente la plus grande extension et qui est perpendiculaire à la direction normale d'écran (Z), et étant présente sur les deux côtés dans une direction transversale (Y), qui est perpendiculaire à la direction longitudinale (X) et à la direction normale d'écran (Z), par rapport à l'appareil positionné avec le dispositif de montage ou à la protection d'écran (1).

6. Dispositif de montage selon l'une des revendications 1 à 5, le cadre (3) ayant une forme de plaque et un côté étant un côté supérieur de plaque et l'autre côté étant un côté inférieur de plaque.

7. Dispositif de montage selon la revendication 6, le dispositif de montage comportant une section d'appui sur le côté inférieur de plaque ou dans des composants de support, de telle sorte que le dispositif de montage positionné avec l'appareil prend appui sur l'écran (2) ou sur l'appareil, la section d'appui formant un plan d'assemblage (XY), dans lequel se situent la direction longitudinale (X) et la direction transversale (Y).

8. Dispositif de montage selon la revendication 6 ou 7, les évidements (31) s'étendant depuis un côté vers l'autre côté.

9. Dispositif de montage selon la revendication 8, l'écran (2) de l'appareil positionné avec le dispositif de montage servant de section d'alignement supplémentaire à la protection d'écran (1).

10. Dispositif de montage selon la revendication 8, l'évidement d'alignement (311) ou les composants de support (4) comportant, vus dans la direction normale d'écran (Z), un contour de la protection d'écran (1) avec un décalage vers l'extérieur parallèlement au plan d'assemblage (XY).

11. Dispositif de montage selon la revendication 10, des rayons concaves d'un contour de sections d'alignement (30) étant réalisés de manière plus petite, servant de rayons convexes correspondants de la protection d'écran (1) et servant de zones de liaison d'alignement (32).

12. Dispositif de montage selon la revendication 6, une plaque centrale (35), qui est disposée parallèlement au plan d'assemblage (XY) à l'intérieur de l'évidement d'alignement (311), étant reliée au cadre (3) par des nervures (33), si bien que se forment des zones affaiblies (36) autour de la plaque centrale (35), la plaque centrale (35) comportant de manière préférée les composants de support (4), qui sont attachés à la plaque centrale (35) par des nervures (33) au moyen d'une zone affaiblie (36).

13. Dispositif de montage selon la revendication 12, les nervures (33) étant réalisées dans les rayons concaves d'évidements d'alignement (311).

14. Dispositif de montage selon la revendication 12, l'évidement d'alignement (311) comportant des évidements supplémentaires (312), qui s'étendent parallèlement au plan d'assemblage (XY) vers l'extérieur depuis l'évidement d'alignement (311) et sur les extrémités desquels se trouvent les nervures (4), les évidements supplémentaires (312) étant utilisés de manière préférée comme des sections de réception (34) des composants de support (33), avec lesquelles les sections de prise (44) peuvent être amenées en prise.

15. Dispositif de montage selon la revendication 12, la plaque centrale (35) comportant un élément d'écartement (50) qui est prévu dans la plaque centrale (35) au moyen d'une zone affaiblie (36) par des nervures (33) et qui a une surface plane au moins sur un côté dans la direction transversale (Y) ou la direction longitudinale (X), l'élément d'écartement (50) comportant de manière préférée les composants de support (4), qui sont attachés à l'élément d'écartement (50) par des nervures (33) au moyen d'une zone affaiblie (36).

16. Dispositif de montage selon la revendication 15, l'élément d'écartement (50) étant positionné de telle sorte qu'il recouvre une zone de l'appareil faisant saillie à l'encontre de la direction normale d'écran (Z) sur un côté inférieur de l'appareil, vu depuis la direction normale d'écran (Z) lorsque l'appareil est positionné avec le dispositif de montage.

17. Dispositif de montage selon la revendication 6, les composants de support (4) étant conçus de telle sorte que, dans la direction normale d'écran (Z), des extrémités inférieures des composants de support (4) ne dépassent pas plus loin qu'un côté inférieur de l'appareil ou qu'un côté inférieur de la plaque centrale (35), lorsque l'appareil est positionné avec le dispositif de montage et que les composants de support (4) sont en prise avec le cadre (3).

18. Dispositif de montage selon la revendication 12, la plaque centrale (35) comportant au moins un élément de maintien (60) d'appareil, qui est prévu dans la plaque centrale (35) par des nervures (33) au moyen d'une zone affaiblie (36) et au moyen duquel l'appareil peut être maintenu.

19. Dispositif de montage selon l'une des revendications 1 à 18, une section d'alignement d'écran (40) ayant des évidements d'élément de commande (45), qui laissent libres des zones de l'appareil ou de l'écran (2) faisant saillie dans une direction parallèlement au plan d'assemblage (XY).
